# EUROPEAN PATENT APPLICATION

(11) **EP 2 314 548 A2**
(43) Date of publication of application: **27.04.2011**
(21) Application number: 10187225.7
(22) Date of filing: 12.10.2010
(51) Int. Cl.: C03B 33/033, C03B 33/10

(54) **Breaking apparatus and breaking method**

(30) Priority: 23.10.2009 JP 2009244336
(71) Applicant: Mitsuboshi Diamond Industrial Co., Ltd., Suita-city, Osaka 564-0044 (JP)
(72) Inventor: Maekawa, Kazuya, Suita-city Osaka 564-0044 (JP)
(74) Representative: TBK-Patent

(57) **Abstract**

[Means for Achieving Object] The breaking apparatus has: a table 12 on which a brittle material substrate is placed; a roller head 40 for supporting a freely rotatable roller 32 which makes contact with the substrate and has a vibration actuator 38 for vibrating the roller in the direction in which it is pressed against the substrate; and a moving mechanism 22 for moving the roller head over the surface of the substrate, and a scribe line S is created on a first surface of a brittle material substrate, and a roller is rolled along the scribe line but on a second surface that is on the opposite side from the first surface while pressed against the substrate with the roller being vibrated in the direction in which the roller is pressed against the substrate, and thus the substrate is divided along the scribe line.

## Description

The present invention relates to a breaking apparatus and a breaking method for dividing a brittle material substrate on which a scribe line is created. Brittle materials substrates include those made of glass, ceramic (low temperature sintered ceramics and high temperature sintered ceramics), a semiconductor material, such as silicon, and sapphire. In addition, substrates to be divided include single substrates and bonded substrates where two substrates are bonded together.

### [Background Art]

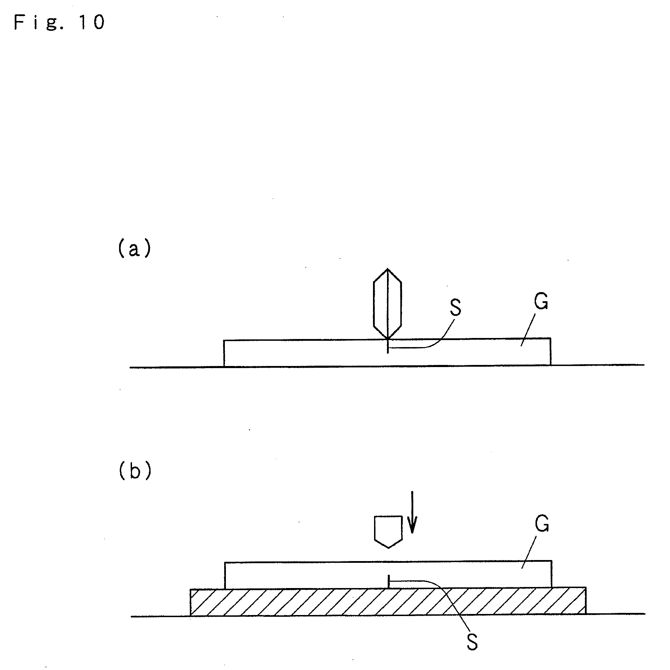

Figs 10(a) and 10(b) are diagrams showing an example of a conventional dividing method for a glass substrate. First, a substrate is placed on the table of a scribing apparatus and a scribe line S is created on a first surface, along which the substrate is to be divided, using a cutter wheel (Fig 10(a)). Next, the substrate is placed on the rubber table of a breaking apparatus, a breaking bar is placed on the second surface, which is on the opposite side from the first surface, in the same place as the scribe line S and a breaking load applied, and an impact or bending moment is applied, so that the substrate breaks (Fig 10(b)).

In the first step, the substrate is generally scribed mechanically; that is, by rolling a cutter wheel over the substrate, or by using the stress caused by the difference in temperature when the substrate is irradiated with a laser and then cooled.
In the second step, a breaking bar is pressed against the substrate or a roller rolled along the created scribe line, and an impact or bending moment applied in order to break the substrate.

In recent years, glass substrates for flat panels have been becoming thinner, harder and lighter in weight. Therefore, the surface along which substrates are divided is easy to break, because the substrate is thin, and the substrate easily chips when the substrate is broken after a scribe line is created. When the substrate is thick (for example 1 mm or more), for example with conventional glass substrates, it is necessary to apply a large load using the breaking bar at the time of breaking, and thus, the substrate easily chips.

It is generally desirable to divide a substrate with as small a load as possible in order to prevent chipping and improve the quality of the product. In order to make this possible, it is necessary for the vertical crack created along the scribe line in the scribing step to be deep.
Different methods for deepening the scribe line have been proposed.

One is for mechanically creating a deep crack using a heavily serrated cutter wheel that can bite deeply into the substrate (see Patent Document 1).

Another is for deepening a crack by rolling a serrated cutter wheel over the substrate while vibrating the scribing head to which the cutter wheel is attached up and down using a vibration actuator (see Patent Document 2).

Still another is for deepening a crack along the scribe line by applying ultrasonic energy along a scribe line on the surface of a glass substrate opposite to the side on which the scribe line is created during the breaking step after creating a scribe line instead of creating a deep crack in the scribing process (see Patent Document 3). In this method, the crack cannot be deepened if the scribe line is not sufficiently deep to begin with (approximately 5 % of the thickness of the substrate).

### [Prior Art Documents]

### [Patent Documents]

[Patent Document 1] Japanese Patent No. 3074143
[Patent Document 2] International Unexamined Patent Publication WO 2008/129943
[Patent Document 3] Japanese Translation of PCT Publication 2008-540169

### [Summary of the Invention]

### [Problem to Be Solved by the Invention]

The glass substrate will be required to be divided with higher quality in the future. The method for scribing a substrate with a serrated cutter wheel in Patent Document 1 and the method for scribing a substrate while vibrating a serrated cutter wheel in Patent Document 2 allow for deeper cracks than with conventional cutter wheels, and therefore are effective for reducing the load required for breaking the substrate. However, it would be more preferable for the required load to be even smaller.
The method for breaking a substrate by applying ultrasonic energy in Patent Document 3 does not work unless the crack is sufficiently deep to begin with.

Therefore, an object of the present invention is to provide a breaking apparatus and breaking method for creating a deeper crack with a smaller breaking load by improving the breaking step.

### [Means for Solving Problem]

In order to achieve the above described object, the present invention provides the following technical means. That is to say, the breaking apparatus according to the present invention has: a table on which a brittle material substrate is placed; a roller head for supporting a freely rotatable roller which makes contact with the substrate and has a vibration actuator for vibrating the roller in the direction in which the roller is pressed against the substrate; and a moving mechanism for moving the roller head over a surface of the substrate.

In addition, in accordance with the breaking method for dividing a brittle material substrate according to the present invention, a scribe line is created on a first surface, according to which a roller is rolled along the scribe line but on a second surface that is on the opposite side from the first surface while pressed against the substrate, and thus the substrate is divided along the scribe line, and the roller is vibrated in the direction in which the roller is pressed against the substrate.

### [Effects of the Invention]

In the breaking apparatus according to the present invention, a brittle material substrate is placed on a table. At this time, the first surface of the substrate on which a scribe line is created makes contact with the table surface. Then, a roller is pressed against the substrate with a desired breaking load and rolled over it along the scribe line but on the other side, which is the second surface of the substrate. At this time, the roller is vibrated in the direction in which it is pressed against the substrate (that is to say, the direction of the thickness of the substrate). As a result, the crack deepens, because of the vibration, even with a small breaking load, as compared to the case where the roller is rolled over the substrate without being vibrated, and thus, the substrate is easy to break. Even substrates that are too thick to break without a large load can be broken with a small load when the roller is vibrated.

### [Brief Description of the Drawings]

Fig 1 is a diagram showing the structure of the breaking apparatus according to one embodiment of the present invention in its entirety;
Fig 2 is a diagram showing the structure of the X stage;
Fig 3 is a cross sectional diagram showing the roller head;
Fig 4 is a cross sectional diagram showing the roller heat according to another embodiment;
Fig 5 is a cross sectional diagram showing a vibration actuator;
Fig 6 is a front diagram showing the roller;
Fig 7 is a side diagram showing the roller;
Fig 8 is a diagram showing the roller for breaking a bonded substrate together with the substrate;
Fig 9 is a front diagram showing only the roller; and
Figs 10(a) and 10(b) are diagrams showing a conventional method for dividing a general glass substrate.

### [Best Mode for Carrying Out the Invention]

In the following, the breaking apparatus and breaking method of the present invention are described in detail in reference to the drawings.

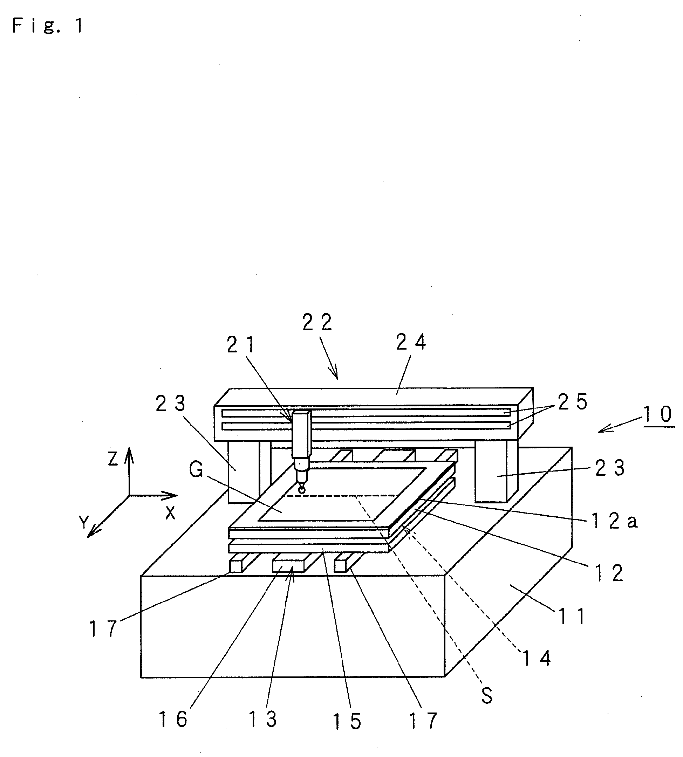

Fig 1 is a diagram showing the structure of the breaking apparatus 10 according to the present invention in its entirety. A table 12 on which a substrate G is placed is provided on top of a base 11. The table 12 is provided with a Y axis driving mechanism 13 for movement in the direction Y and a table rotating mechanism 14 for rotating the table 12 that is attached beneath the table 12. A rubber sheet 12a is provided on the top surface of the table 12, so that the substrate G easily bends when a load is applied from the top.
The Y axis driving mechanism 13 is formed of a Y stage 15 for supporting the table 12 with the table rotating mechanism 14 in between, a linear motor 16 for driving the Y stage 15 in the direction Y, and a linear guide 17 for guiding the Y stage 15 in the direction Y.
The table rotating mechanism 14 is attached on top of the Y stage 15 so that the table 12 can be rotated in a horizontal plane by means of a motor (not shown).

In addition, an X stage 21 and an X axis driving mechanism 22 for moving it in the direction X are provided on top of the base 11. The X axis driving mechanism 22 is formed of a guide 24 which extends over the table 12 and supports 23 for supporting the guide. The guide 24 is provided with a linear motor (not shown) for driving the X stage 21 in the direction X and a linear guide 25 for guiding the X stage 21 in the direction X.

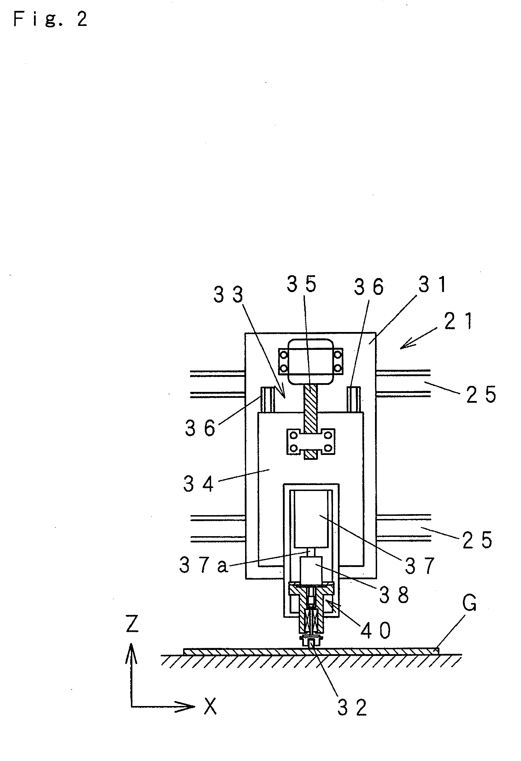

Next, the X stage 21 is described. Fig 2 is a diagram showing the structure of the X stage 21. Here, Fig 1 shows the X stage 21 with an outside cover, while Fig 2 shows the internal mechanism.
The X stage 21 is provided with a base plate 31 that is guided by the linear guide 25 and a Z axis driving mechanism 33 for moving a roller 32 in the direction Z on top of a base plate 31.
The Z axis driving mechanism 33 is formed of a Z stage 34, a ball screw mechanism 35 for driving the Z stage 34 in the direction Z, and a linear guide 36 for guiding the Z stage 34 in the direction Z.

A load applying cylinder 37, which is a pressure applying mechanism for pressing the roller 32 against the substrate G, is attached to the Z stage 34, and a roller head 40 is attached to the rod 37a of the load applying cylinder 37 with a vibration actuator 38 in between. An air cylinder, a servomotor or a voice coil motor can be used for the load applying cylinder 37.
In the load applying cylinder 37, the height of the roller 32 can be adjusted by means of the Z axis driving mechanism 33, and after that the load for pressing the roller 32 against the substrate G adjusted.
The vibration actuator 38 vibrates the roller 32 up and down with a preset amplitude and frequency.

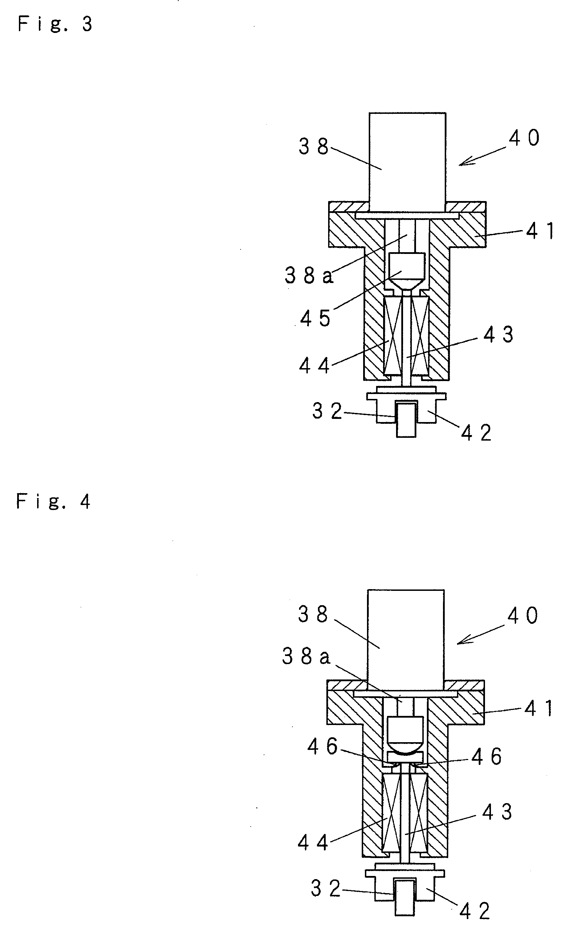

Fig 3 is a cross sectional diagram showing the roller head 40 for supporting the roller 32 and conveying the vibration of the vibration actuator 38 to the roller 32. The roller head 40 has a main body 41 to which the vibration actuator 38 is secured, a holder 42 for holding the roller 32 in such a manner that it is freely rotatable, a shaft 43 for conveying the vibration of the vibration actuator 38 to the holder 42, and a guide 44 for guiding the shaft 43. Balls (not shown) are provided between the guide 44 and the shaft 43, so that the shaft 43 can move smoothly relatively to the guide 44. The rod 38a of the vibration actuator 38 is screwed to the shaft 43 in the linking portion 45. The lower end of the shaft 43 protrudes from the main body 41 and is screwed to the holder.
The lower end of the holder 42 forks, so that the rotational axis of the roller 32 can be supported, and thus the roller 32 is supported in such a manner as to be freely rotatable.

Fig4 is a cross sectional diagram showing the roller head 40 according to another embodiment. The same symbols are used for parts that are the same as in Fig 3, and the descriptions thereof are not repeated. In this embodiment, the rod 38a of the vibration actuator 38 and the shaft 43 are not connected, and the shaft 43 is pressed against the rod 38a by means of a conical spring 46. When the rod 38a and the shaft 43 are not connected, the lateral displacement of the vibration actuator 38 is not conveyed to the shaft 43; only the longitudinal displacement is conveyed.

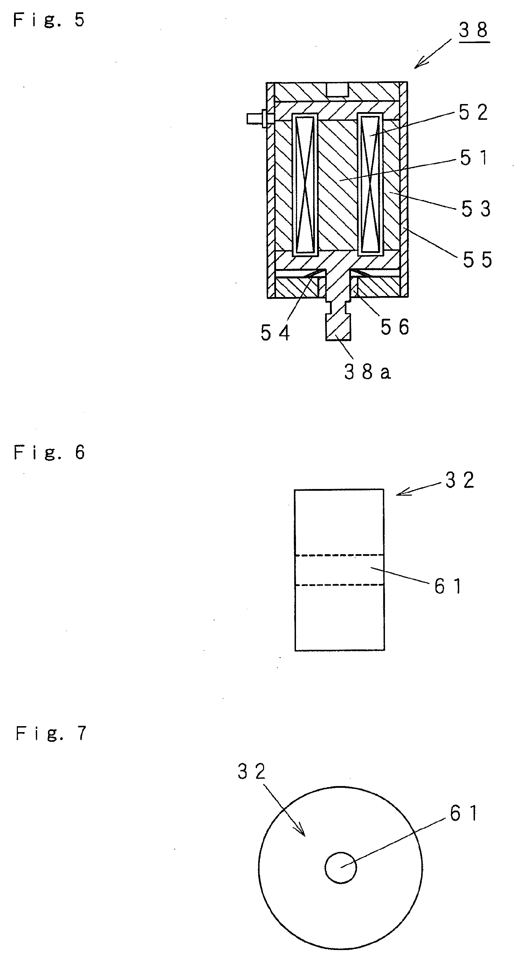

Fig 5 is a cross sectional diagram showing the vibration actuator 38. The vibration actuator 38 is mainly formed of a super-magnetostrictive element 51, a coil 52 and a bias magnet 53, which are arranged in concentric circles, a conical spring 54 and a case 55 for housing these. The super-magnetostrictive element 51 changes in size in response to the magnetic field generated by the bias magnet 53 and the coil current. Therefore, the super-magnetostrictive element 51 vibrates in accordance with the amplitude and frequency of the coil current when the coil current changes. The rod 38a is pressed against the super-magnetostrictive element 51 by means of the conical spring 54, and therefore, the vibration of the super-magnetostrictive element 51 is conveyed to the rod 38a. The vibration of the vibration actuator 38 is adjustable within a frequency range of 1 kHz to 10 kHz and a displacement range of 1 µm to 20 µm. The vibration of the rod 38a is guided by the guide 56 and conveyed to the roller 32 through the shaft 43 (Fig 3).

Here, a piezoelectric element may be used as the vibrating element for the vibration actuator 38 instead of the super-magnetostrictive element 51.

Fig 6 is a front diagram showing the roller 32, and Fig 7 is a side diagram. The roller 32 is in cylindrical form with a hole 61 for a spindle at the center. As for the dimensions of the roller 32, the outer diameter is within a range of 2 mm to 50 mm, and the thickness within a range of 0.5 mm to 10 mm. Polyacetal, polyurethane rubber or another material having a rubber hardness Hs of 20 ° to 90 ° is used, so that scratching can be prevented when making contact with the substrate.

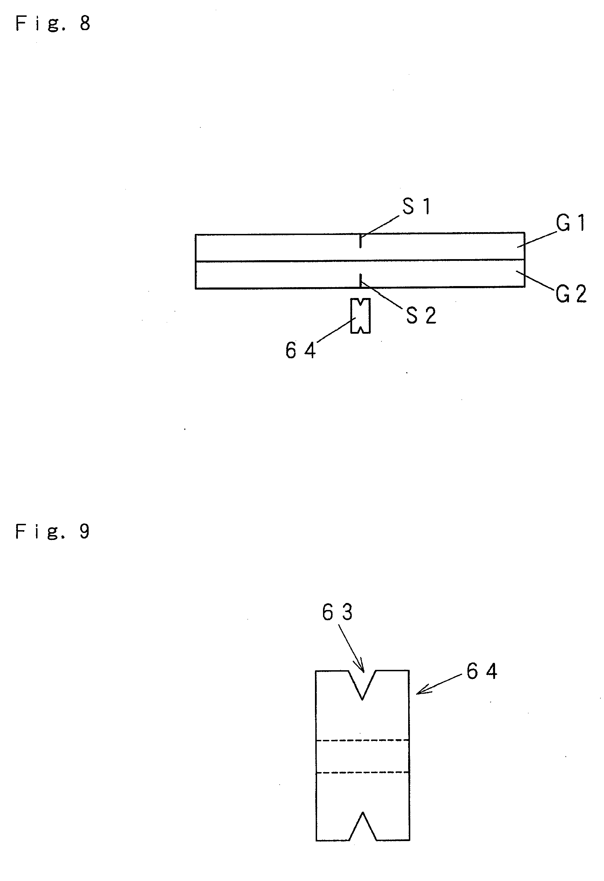

Here, in the case where a cell substrate made of two substrates G1 and G2 that are bonded together is divided, as shown in Fig 8, and scribe lines S1 and S2 are created on both sides (first surface and second surface) of the cell substrate so as to face each other in advance, there is a risk that the roller may make contact with the scribe lines S1 and S2 in the substrates when it is pressed against the substrates G1 and G2, and therefore, it is preferable to use a roller 64 having a trench 63 as that shown in Fig 9.

The breaking apparatus 10 is controlled by a computer (not shown); thus, the X axis driving mechanism 22, the Y axis driving mechanism 13, the Z axis driving mechanism 33 and the table rotating mechanism 14, as well as other parts, are operated by the computer.

Next, the breaking method using the breaking apparatus 10 according to one embodiment is described in reference to Figs 1 and 2. In accordance with the breaking method according to the present invention, a scribe line S is created in advance, and the substrate is pressed along the scribe line S but on the rear side.
The method for creating a scribe line is not particularly limited. For example, the substrate may be locally heated through irradiation with a laser and then locally cooled, so that the substrate is scribed due to the residual stress (see Japanese Patent No. 3027768), or the substrate may be mechanically scribed by rolling a cutter wheel over the surface.
In the latter process, the cutter wheel may have a normal, non-serrated edge, or be serrated so as to bite into the substrate more deeply, as in Patent Document 1.

In the breaking apparatus 10, a substrate G is placed on top of the table 12 with the scribe line S making contact with the table 12 (rubber sheet 12a). Then, the substrate is positioned using the alignment mark on the substrate, by operating the X axis driving mechanism 22, the Y axis driving mechanism 13 and the table rotating mechanism 14, so that the end of the line along which the substrate is to be broken is positioned directly beneath the roller 32.

Next, the roller head 40 is lowered by driving the Z axis driving mechanism 33, so that the roller 32 makes contact with the substrate G. The load applying cylinder 37 is operated, so that the roller 32 presses the substrate G with a desired breaking load. Concretely, the breaking load is adjusted within a range of 1 N to 50 N.
Next, the vibration actuator 38 is operated, so that the roller 32 vibrates with a desired amplitude and frequency. Concretely, the amplitude is within a range of 1 µm to 20 µm and the frequency within a range of 1 kHz to 10 kHz during the operation.
The X axis driving mechanism 22 is operated in this state, so that the roller head 40 moves at a desired speed. Concretely, the speed is set to an appropriate value within a range of 10 mm/sec to 1000 mm/sec (usually 50 mm/sec to 500 mm/sec), and the roller moves along at this speed while being pressed against the substrate.

During the above described operation, the roller 32 is pressed against the substrate along the scribe line S but on the rear side while being vibrated, and as a result, the crack deepens, so that the substrate can be broken with a smaller load.
Even substrates that are too thick to break unless a large load is applied to deepen the crack can be broken with a small load.
In addition, the surface along which the substrate is divided has barely any chips, because the substrate is broken with a small load, and thus, the quality of the product is high.
In addition to the breaking load applied to the roller and the speed of the roller, the amplitude and frequency of vibration can also be set as parameters for adjustment in accordance with the thickness and material of the substrate to be broken, and thus there is more freedom of adjustment.

Though typical embodiments of the present invention are described above, the present invention is not necessarily limited to these, and may be modified, as long as the object can be achieved and the scope is not deviated from.

In addition, though the surface of the roller through which the substrate is pressed is flat in the direction of the rotational axis, it may be curved with the center of the roller protruding from the left and right ends (downward protruding curve), so that it becomes easier to bend the substrate.

In addition, though the amplitude and frequency of vibration are constant when breaking the substrate in the above described embodiment, the amplitude may be different for each point along the breaking line. For example, the amplitude of vibration may be greater at the end from which breaking starts, where the roller head is immobile, so that the crack deepens and smaller as the roller head starts moving, so that the substrate can be broken with less damage (the crack runs through the substrate even with a smaller vibration).

### [Industrial Applicability]

The breaking method according to the present invention can be used for breaking substrates made of a brittle material, such as glass along a scribe line.

### [Explanation of Symbols]

- 10: breaking apparatus
- 12: table
- 13: Y axis driving mechanism
- 14: table rotating mechanism
- 22: X axis driving mechanism
- 32: roller
- 33: Z axis driving mechanism
- 37: load applying cylinder
- 38: vibration actuator
- 40: roller head
- 43: shaft
- 44: guide
- 51: super-magnetostrictive element
- S: scribe line
- G: substrate
[Object] To provide a breaking apparatus with which a substrate can be divided with a smaller breaking load.
[Means for Achieving Object] The breaking apparatus has: a table 12 on which a brittle material substrate is placed; a roller head 40 for supporting a freely rotatable roller 32 which makes contact with the substrate and has a vibration actuator 38 for vibrating the roller in the direction in which it is pressed against the substrate; and a moving mechanism 22 for moving the roller head over the surface of the substrate, and a scribe line S is created on a first surface of a brittle material substrate, and a roller is rolled along the scribe line but on a second surface that is on the opposite side from the first surface while pressed against the substrate with the roller being vibrated in the direction in which the roller is pressed against the substrate, and thus the substrate is divided along the scribe line.

## Claims

1. A breaking apparatus, **characterized by** comprising:
a table on which a brittle material substrate is placed;
a roller head for supporting a freely rotatable roller which makes contact with said substrate and has a vibration actuator for vibrating said roller in the direction in which the roller is pressed against said substrate; and
a moving mechanism for moving said roller head over a surface of the substrate.

2. The breaking apparatus according to Claim 1, wherein said vibration actuator has a vibration adjusting portion for adjusting the frequency and displacement.

3. The breaking apparatus according to Claim 2, wherein said vibration adjusting portion adjusts the frequency within a range of 1 kHz to 10 kHz and the displacement within a range of 1 µm to 20 µm.

4. The breaking apparatus according to any of Claims 1 to 3, wherein the roller is made of either polyacetal or polyurethane rubber.

5. A breaking method for dividing a brittle material substrate where a scribe line is created on a first surface, according to which a roller is rolled along said scribe line but on a second surface that is on the opposite side from said first surface while pressed against the substrate, and thus said substrate is divided along the scribe line, **characterized in that**
said roller is vibrated in the direction in which the roller is pressed against the substrate.

6. The breaking method according to Claim 5, wherein the frequency of said roller is adjusted within a range of 1 kHz to 10 kHz and the displacement is adjusted within a range of 1 µm to 20 µm.
